# EUROPÄISCHE PATENTANMELDUNG

(11) **EP 1 935 728 A2**
(43) Veröffentlichungstag der Anmeldung: **25.06.2008**
(21) Anmeldenummer: 07120378.0
(22) Anmeldetag: 09.11.2007
(51) Int. Cl.: B60S 1/18

(54) **Wischerantrieb für ein Fahrzeug und Verfahren zu seiner Herstellung**

(30) Priorität: 22.12.2006 DE 102006061267
(71) Anmelder: ROBERT BOSCH GMBH, 70442 Stuttgart (DE)
(72) Erfinder: Benner, Andreas, 77830 Buehlertal (DE); Wickermann, Hans, 77815 Buehl (DE); Boos, Tino, 76532 Baden-Baden (DE); Dudek, Alexander, 77656 Offenburg (DE); Kraus, Achim, 77815 Buehl (DE)

(57) **Zusammenfassung**

Die Erfindung betrifft einen Wischerantrieb für ein Fahrzeug, insbesondere Kraftfahrzeug, mit einer in einem Gehäuse (12) gelagerten Antriebswelle (1), an der ein Antriebskurbelarm (14) festgelegt ist, wobei die Antriebswelle (1) einen Aufnahmedurchbruch (15) des Antriebskurbelarms (14) durchsetzt und mit einem freien Endbereich (5) aus dem Aufnahmedurchbruch (15), den Antriebskurbelarm (14) überragend, axial herausragt, und wobei der freie Endbereich (5) im Wesentlichen axial zum Festlegen des Antriebskurbelarms (14) umgeformt ist. Es ist vorgesehen, dass die Antriebswelle (1) mit ihrem im Gehäuse (12) liegenden Ende (3) einem Wandbereich (24) des Gehäuses (12) mit einem derart geringen Abstand (a) gegenüberliegt oder an dem Wandbereich (24) anliegt, dass die axialen Umformungskräfte beim Festlegen des Antriebskurbelarms (14) gehäuseaußenseitig abfangbar sind.

Weiter betrifft die Erfindung ein Verfahren zu dessen Herstellung.

## Beschreibung

Die Erfindung betrifft einen Wischerantrieb für ein Fahrzeug nach Oberbegriff des Anspruchs 1. Die Erfindung betrifft weiter ein Verfahren zu dessen Herstellung.

### Stand der Technik

Wischerantriebe für Fahrzeuge, insbesondere Kraftfahrzeuge, sind bekannt. Sie dienen dazu, Beaufschlagungen von Glasflächen (beispielsweise von Windschutzscheiben oder von Scheinwerfern) mit Niederschlag und/oder Schmutz und/oder Sprühfilm zu beseitigen. Hierzu wird ein Wischblatt in oszillierende Bewegung versetzt, wobei sich diese Bewegung gegebenenfalls periodisch wiederholt. Hierzu sind Wischerantriebe vorgesehen, die beispielsweise von Elektromotoren angetrieben werden und deren Aufgabe es ist, den Rundlauf des Elektromotors in eine (oszillierende) Wischblattbewegung umzusetzen. Die Bewegung des Elektromotors wird hierbei über einen Antriebskurbelarm auf das übrige Wischgestänge von einer Antriebswelle des Elektromotors beziehungsweise eines zwischen Elektromotor und Antriebskurbelarm geschalteten Getriebes übertragen. Üblicherweise wird der Antriebskurbelarm mittels eines Rändelkegels mit der Antriebswelle verbunden. Das Motormoment wird über Formschluss von an der Antriebswelle ausgebildeten Rändelzähnen auf den Antriebskurbelarm übertragen, wobei diese sich aufgrund der axialen Verspannung von Antriebswelle und Antriebskurbelarm verzahnen; diese Axialverspannung erfolgt im Stand der Technik üblicherweise über eine Sechskantmutter. Vereinzelt wird der Antriebskurbelarm auch auf einen Zylinderrändel aufgepresst, der an der Antriebswelle ausgebildet ist. Die axiale Sicherung erfolgt hierbei üblicherweise durch ein Vertaumeln des Wellenüberstandes, also ein "Breitdrücken" der Antriebswelle im Bereich des Durchdringungsbereichs der Antriebswelle durch den Antriebskurbelarm. Zum Vertaumeln muss die Antriebswelle indes axial abgestützt werden, um die sehr hohen Axialkräfte, die durch das zum Vertaumeln erforderliche Werkzeug aufgebracht werden, aufzunehmen. Daher sind in Antriebsgetrieben beziehungsweise in speziell hierfür eingerichteten Motoreinheiten an der dem Antriebskurbelarm gegenüberliegenden Seite der Antriebswelle Öffnungen im Getriebe- und/oder Motoreinheiten-Gehäuse vorgesehen, die nach dem Vertaumeln mit einem zusätzlichen Deckel verschlossen werden müssen, wobei dies stets die Gefahr des Eindringens von Wasser und/oder von Schmiermittelsverlust bedeutet.

### Offenbarung der Erfindung

Aufgabe der Erfindung ist es, einen Wischerantrieb mit einer Anbindung eines Antriebskurbelarms an eine Antriebswelle bereitzustellen, die die genannten Nachteile vermeidet. Es soll hierbei bei geringer Bauhöhe und einer geringen Anzahl verwendeter Bauteile eine leicht zu fertigende Einheit geschaffen werden, insbesondere soll das Verfahren zur Herstellung vereinfacht werden.

Hierzu wird ein Wischerantrieb für ein Fahrzeug, insbesondere Kraftfahrzeug vorgeschlagen, mit einer in einem Gehäuse gelagerten Antriebswelle, an der ein Antriebskurbelarm festgelegt ist, wobei die Antriebswelle einen Aufnahmedurchbruch des Antriebskurbelarms durchsetzt und mit einem freien Endbereich aus dem Aufnahmedurchbruch, den Antriebskurbelarm überragend, axial herausragt, und wobei der freie Endbereich im Wesentlichen axial zum Festlegen des Antriebskurbelarms umgeformt ist. Hierbei ist vorgesehen, dass die Antriebswelle mit ihrem im Gehäuse liegenden Ende einem Wandbereich des Gehäuses mit einem derart geringen Abstand gegenüberliegt oder an dem Wandbereich anliegt, dass die axialen Umformungskräfte beim Festlegen des Antriebskurbelarms gehäuseaußenseitig abfangbar sind. Die im Stand der Technik bekannten Ausführungsformen, bei denen der Antriebskurbelarm an der Antriebswelle durch im Wesentlichen axiales Umformen festgelegt wird, weisen bekanntermaßen zum Abfangen der axialen Umformungskräfte während des Festlegens des Antriebskurbelarms (also während des Umformvorgangs) Ausnehmungen in dem Gehäuse auf, durch die an die dem umzuformenden Bereich der Antriebswelle gegenüberliegende Antriebswellenseite abgestützt wird, damit die Umformungskräfte aufgefangen werden können, ohne eine im Gehäuse befindliche Lagerung, insbesondere ein Wischergetriebe, zu beschädigen. Vorliegend geschieht die Abstützung nicht durch eine Öffnung des Gehäuses, durch die ein Widerlager oder Gegenlager die Antriebswelle erreicht, sondern durch das Gehäuse selbst hindurch. Hierzu weist die Antriebswelle mit ihrem im Gehäuse liegenden Ende einen derart geringen Abstand zu einem Wandbereich des Gehäuses auf, dass das Gehäuse bei Kraftbeaufschlagung in Axialrichtung der Antriebswelle (insbesondere durch gehäuseaußenseitige Beaufschlagung mit einem Gegenlager während des Umformvorganges) keinen oder nur einen unwesentlichen Verformungsvorgang von Gehäusematerial erfährt.

In einer weiteren Ausführungsform ist vorgesehen, dass der Wandbereich, in dem die axialen Umformungskräfte von der Antriebswelle auf ein gehäuseaußenseitig liegendes Gegenlager übertragen werden, der Boden eines dem Gehäuse angehörenden Napfes ist. An dem Gehäuse ist folglich ein Napf ausgebildet, der insbesondere auch zur Aufnahme und Führung des Gegenlagers oder eines Teiles desselben und/oder der Antriebswelle zumindest während des Umformvorganges dient. Der Napf gehört hierbei zum Gehäuse, ist also nicht als separates Bauteil ausgebildet, sondern verbleibt als Bestandteil des Gehäuses auch nach dem Umformvorgang.

In einer bevorzugten Ausführungsform ist der Napf als Gehäuseeinstülpung ausgebildet. Der Napf weist folglich nach innen in das Gehäuse hinein, dergestalt, dass der Boden des Napfes weiter im Inneren des Gehäuses liegt als die Öffnung des Napfes, die im Wesentlichen flächenbündig mit einer Außenfläche des Gehäuses ist. Gerade bei dieser Ausführungsform ist es sehr leicht möglich, das Gegenlager durch einfaches Einbringen in den Napf korrekt zu führen und aufzunehmen; hierdurch ist eine stets sichere Positionierung des Gegenlagers gewährleistet, so dass während des Umformvorganges die Kräfte genau in der gewünschten Art und Weise durch den Boden des Napfes von der Antriebswelle auf das Gegenlager abgeleitet werden. Überdies vergrößert sich auf diese Weise die Bauform des Gehäuses nicht. Da der Napf geschlossen ist, nämlich insbesondere den Boden aufweist, ist es nicht erforderlich, wie aus dem Stand der Technik bekannt, Deckel oder ähnliche Abdichtungen einzubringen, um das Gehäuse gegen die Umwelt abzudichten.

In einer bevorzugten Ausführungsform ist vorgesehen, dass der Wandbereich zu einem Gehäusedeckel des Gehäuses gehört. Mehrteilige Gehäuse werden verwendet, um auf einfache Art und Weise Schaltungen, Antriebe und Ähnliches einzuschalen. Im vorliegenden Fall werden Teile des Wischerantriebs, beispielsweise ein Motor und/oder ein Getriebe, in das Gehäuse eingeschalt; dies gelingt am einfachsten durch Verwendung eines mehrteiligen Gehäuses. Bei der Ausbildung mit einem Gehäusedeckel, der den Wandbereich zur Ableitung der Axialkräfte während des Umformvorganges aufnimmt, lässt sich die gesamte Einheit, insbesondere ein Getriebe, leicht und ohne Weiteres im Gehäuse anbringen, insbesondere montieren, und wird dann abschließend von dem Gehäusedeckel verschlossen.

In einer besonders bevorzugten Ausführungsform gehört der Wandbereich zu einem Getriebegehäusedeckel eines Getriebes des Wischerantriebs. Das vorstehend beschriebene gilt im besonderen Maße für Ausführungen von Getrieben von Wischerantrieben, da diese Getriebe bei Verwendung derartiger mehrteiliger Gehäuse mit einem Gehäusedeckel sehr leicht eingeschalt und montiert werden können.

In einer weiteren bevorzugten Ausführungsform ist vorgesehen, dass die Umformung als Vertaumelung ausgebildet ist. Mit Vertaumelung ist gemeint, dass durch Beaufschlagung des freien Endbereichs der Antriebswelle eine Umformung, insbesondere eine Kaltverformung von Material der Antriebswelle eintritt, wodurch sich partiell der Durchmesser der Antriebswelle im freien Endbereich vergrößert, so dass die Antriebswelle über den Aufnahmedurchbruch des Antriebskurbelarms vergrößert wird und den Antriebskurbelarm an einer Antriebskurbelarmoberseite direkt beaufschlagt. Hierdurch wird eine Axialsicherung ausgebildet, die verhindert, dass der Antriebskurbelarm von der Antriebswelle abrutscht.

Weiter wird ein Verfahren vorgeschlagen zum Festlegen eines Antriebskurbelarms eines Wischerantriebs für ein Fahrzeug, insbesondere Kraftfahrzeug, an einer in einem Gehäuse gelagerten Antriebswelle, insbesondere zur Herstellung eines Wischertriebs nach einer oder mehrerer der vorstehend beschriebenen Ausführungsformen, mit folgenden Schritten:
- Einführen der Antriebswelle in einen Aufnahmedurchbruch des Antriebskurbelarms, derart, dass ein freier Endbereich der Antriebswelle aus dem Aufnahmedurchbruch, den Antriebskurbelarm überragend, axial herausragt,
- im Wesentlichen axiales Umformen des freien Endbereichs zur Ausbildung einer aus dem Material des freien Endbereichs gebildeten Wulst, die den Antriebskurbelarm axial beaufschlagt und fixiert,
- Abstützen des im Gehäuse liegenden Stirnendes der Antriebswelle beim Verformungsvorgang mittels eines außerhalb des Gehäuses liegenden Gegenlagers unter Dazwischenschaltung der Gehäusewandung.

Die Herstellung des Wischerantriebs geschieht folglich in der Art und Weise, dass in den Aufnahmedurchbruch des Antriebskurbelarms ein freier Endbereich der Antriebswelle eingeführt wird, und zwar so, dass ein freier Endbereich der Antriebswelle aus dem Aufnahmedurchbruch herausragt und den Antriebskurbelarm hierbei überragt. Sodann wird der freie Endbereich, der den Antriebskurbelarm überragt, im Wesentlichen axial umgeformt, so dass sich aus dem Material des freien Endbereichs eine Wulst bildet, deren Antriebskurbelarm axial beaufschlagt und fixiert. Hierbei wird das im Gehäuse liegende Stirnende der Antriebswelle während dieses Verformungsvorganges mittels eines außerhalb des Gehäuses liegenden Gegenlagers unter Dazwischenschaltung der Gehäusewandung abgestützt. Die durch den Umformvorgang auf die Welle bewirkte Kraftbeaufschlagung wird folglich von dem Gegenlager durch die Gehäusewandung hindurch aufgefangen. Die Antriebswelle stützt sich mit ihrem im Gehäuse liegenden Stirnende nämlich an dem Gehäuse, nämlich der Gehäusewandung, ab, die ihrerseits an dem Gegenlager abgestützt ist. Durch die Ausbildung des Gehäuses dergestalt, dass zwischen dem im Gehäuse liegenden Stirnende der Antriebswelle und der Gehäusewandung selbst nur ein geringer oder auch gar kein Abstand verbleibt, ist die Materialverformung der Gehäusewandung sehr gering. Diese ist im Wesentlichen, insbesondere bei Verwendung von elastischem Gehäusematerial, reversibel und selbstrückstellend, so dass weitere Schritte zur Wiederherstellung des Gehäuses oder zur Abdichtung des Gehäuses nicht erforderlich sind.

### Kurze Beschreibung der Zeichnungen

Die Erfindung wird im Nachfolgenden anhand von Figuren näher erläutert. Dazu zeigen
- Figur 1: eine Antriebswelle,
- Figur 2: eine Antriebswelle mit einem hieran festgelegten Antriebskurbelarm im Querschnitt,
- Figur 3: einen Gehäuseboden mit einem als Gehäuseinstülpung ausgebildeten Napf und
- Figur 4: die Anordnung von Antriebswelle, Antriebskurbelarm, Gehäuse, Gegenlager und Umformungswerkzeug während des Umformvorganges.

### Ausführungsform(en) der Erfindung

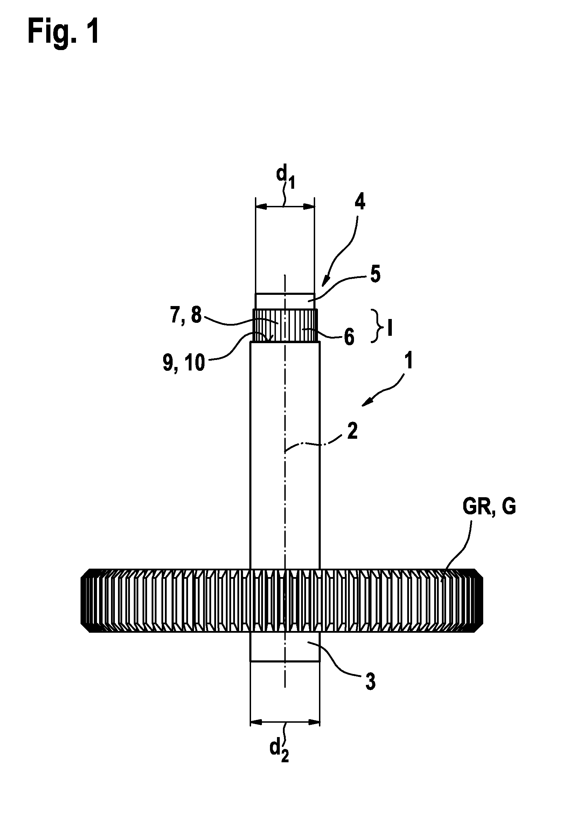

Figur 1 zeigt eine Antriebswelle 1 für einen nicht dargestellten Wischerantrieb. Die Antriebswelle 1 weist einen zylindrischen Querschnitt auf, mit einer Antriebswellenachse 2, einem gehäuseseitigen Ende 3, einem in Axialerstreckung diesem gegenüberliegenden kurbelarmseitigen Ende 4 und einem im Bereich des gehäuseseitigen Endes 3, zu diesem jedoch beabstandet, drehfest mit den Antriebswelle 1 verbundenen Getrieberad GR, das zum Zusammenwirken mit einem hier nicht näher dargestellten Getriebe G dient. An dem kurbelarmseitigen Ende 4 ist endseitig ein freier Endbereich 5 ausgebildet, wobei der Durchmesser d₁ des freien Endbereichs 5 etwas geringer ist als der Durchmesser d₂ der Antriebswelle 1. An den freien Endbereich 5 in Axialerstreckung Richtung gehäuseseitiges Ende 3 unmittelbar anschließend ist ein Verbindungsbereich 6 ausgebildet, der eine Mitnahmerändelung 7, insbesondere eine Zylinderrändelung 8, zur drehfesten Verbindung der Antriebswelle 1 (über den Verbindungsbereich 6) mit einem hier noch nicht näher dargestellten Antriebskurbelarm aufweist. In Axialerstreckung weist der Verbindungsbereich 6 eine Axiallänge I auf, die im Wesentlichen der Stärke des hier nicht dargestellten Antriebskurbelarms entspricht. Unterhalb der Zylinderrändelung 8 (also in Richtung des gehäuseseitigen Endes 3) ist bevorzugt eine Ringstufe 9 ausgebildet, die als Axialanschlag 10 für den hier nicht dargestellten Antriebskurbelarm dient.

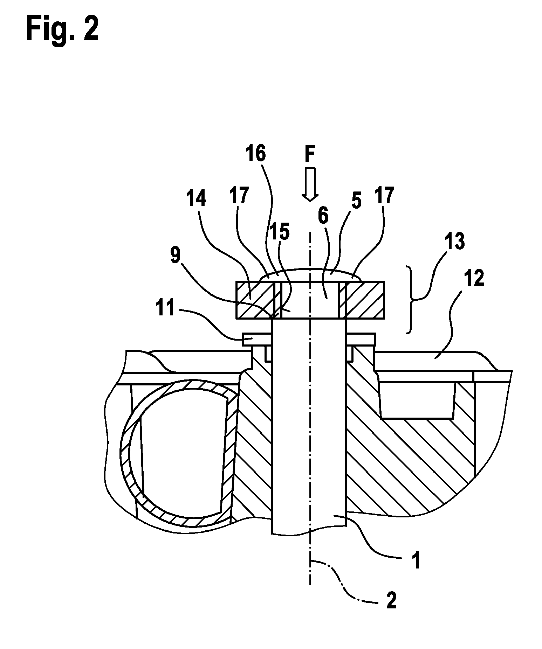

Figur 2 zeigt eine Detailansicht eines erfindungsgemäßen Wischerantriebs im Querschnitt, nämlich die Antriebswelle 1 mit der Antriebswellenachse 2 in einer Lagerung 11 eines Gehäuses 12 mit einem das Gehäuse 12 überragenden Durchtrittsbereich 13 der Antriebswelle 1, in dem diese den Verbindungsbereich 6 aufweist, der mit einem Antriebskurbelarm 14 drehfest verbunden ist. Die Antriebswelle 1 durchdringt hierzu den Antriebskurbelarm 14 in einem an dem Antriebskurbelarm 14 ausgebildeten Aufnahmedurchbruch 15, wobei der freie Endbereich 5 der Antriebswelle 1 den Antriebskurbelarm 14 überragt. Zur Axialfixierung des Antriebskurbelarms 14 auf der Antriebswelle 1 dient die bereits in Figur 1 beschriebene Ringstufe 9 antriebsseitig sowie eine aus dem freien Endbereich 5 gebildete Vertaumelung 16. Die Vertaumelung 16 bildet dabei eine Wulst 17 aus, die den Aufnahmedurchbruch 15 des Antriebskurbelarms 14 in Radialrichtung überragt, und somit ein axiales Verschieben des Antriebskurbelarms 14 auf der Antriebswelle 1 durch unmittelbare Beaufschlagung des Antriebskurbelarms bei Durchmesserüberragung unmöglich macht. Der Antriebskurbelarm wird getriebeseitig folglich durch die Ringstufe 9 und endseitig durch die Wulst 17 der Vertaumelung 16 fixiert. Zum Ausbilden der Wulst 17 muss bei Anbringen der Vertaumelung 16 eine hohe Axialkraft F im Wesentlichen in Axialrichtung auf den freien Endbereich 5 aufgewendet werden. Die Antriebswelle 1 wird demzufolge in Richtung R, nämlich im Wesentlichen in Axialrichtung entsprechend der Beaufschlagung mit der Axialkraft F ausweichen. Aus diesem Grunde ist an ihrem hier nicht dargestellten gehäuseseitigen Bereich eine Abstützung zur Aufnahme der Kraft F vorzusehen. Kann die Antriebswelle 1 nämlich in Richtung R nachgeben, wird es zu Verformungen und/oder Beschädigungen beispielsweise des Getrieberades GR oder des Getriebes G kommen (hier nicht dargestellt).

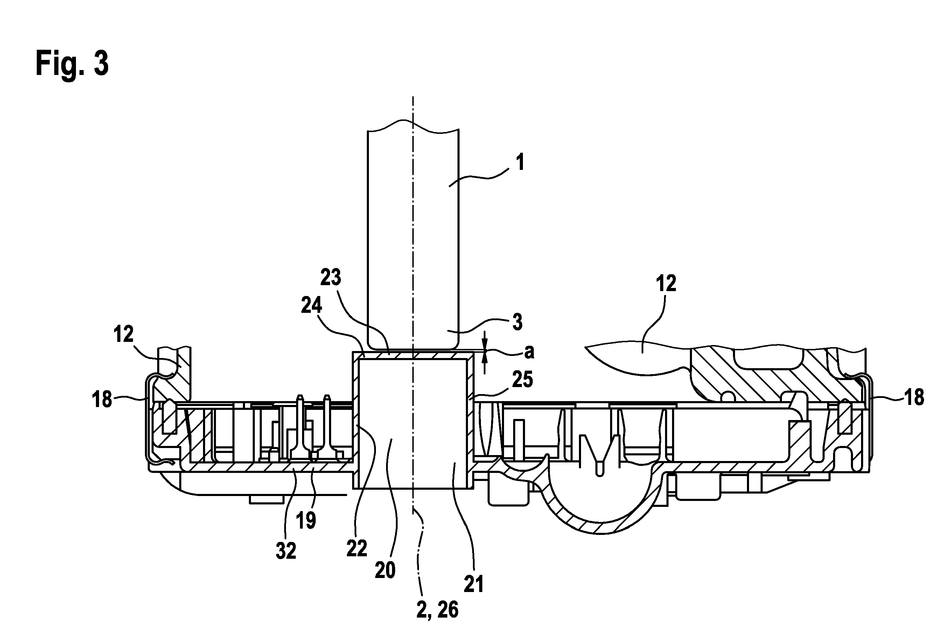

Figur 3 zeigt die Antriebswelle 1, nämlich deren gehäuseseitiges Ende 3, innerhalb des nur ausschnittsweise dargestellten Gehäuses 12. Das Gehäuse 12 weist einen, beispielsweise durch Federklammern 18 angebrachten und gehaltenen Gehäusedeckel 19 auf, der einen als Gehäuseeinstülpung 20 ausgebildeten Napf 21 aufweist, wobei dieser Napf 21 eine Napfwandung 22 und einen Boden 23 aufweist. Der Boden 23 liegt als Wandbereich 24 dem gehäuseseitigen Ende 3 der Antriebswelle 1 unmittelbar gegenüber, wobei die Antriebswellenachse 2 im Wesentlichen zentral durch den Napf 21 verläuft. Bevorzugt ist der Napf 21 beispielsweise als Rotationskörper 25 ausgebildet, insbesondere einstückig zu dem Gehäusedeckel 19 beziehungsweise einer Gehäusewandung 32, wobei eine Rotationsachse 26 des Napfes 21 der Antriebswellenachse 2 im eingebauten Zustand der Antriebswelle 1 entspricht beziehungsweise zu dieser fluchtet. Das Gehäuse 12 weist demzufolge die Gehäusewandung 32 auf, die im Bereich des Bodens 23 am gehäuseseitigen Ende 3 der Antriebswelle 1 dieser unmittelbar gegenüberliegt. Bevorzugt sind der Boden 23 und das gehäuseseitige Ende 3 der Antriebswelle 1 so ausgebildet, dass ihre Ebene im Wesentlichen senkrecht zur Antriebswellenachse 2 stehen. Zwischen dem gehäuseseitigen Ende 3 der Antriebswelle 1 und dem Boden 23 ist nur ein sehr geringer Abstand a. Der Abstand a wird hierbei so bemessen, dass zwar ein freies Rotieren der Antriebswelle 1 um die Antriebswellenachse 2 möglich ist, ohne dass diese vom Boden 23 beaufschlagt wird und hierbei beispielsweise Reibkräfte zu überwinden sind, andererseits aber bei Kraftbeaufschlagung des Bodens 23 durch die Antriebswelle 1 in ihrer Axialrichtung (entsprechend der Antriebswellenachse 2) oder aus Richtung des Napfes 21 auf die Antriebswelle 1 zu deren gehäuseseitigem Ende 3 hin nur eine geringe Verformung des Bodens 23 auftreten kann, insbesondere dann, wenn in den Napf 21 ein hier nicht dargestellter Gegenhalter eingebracht wird.

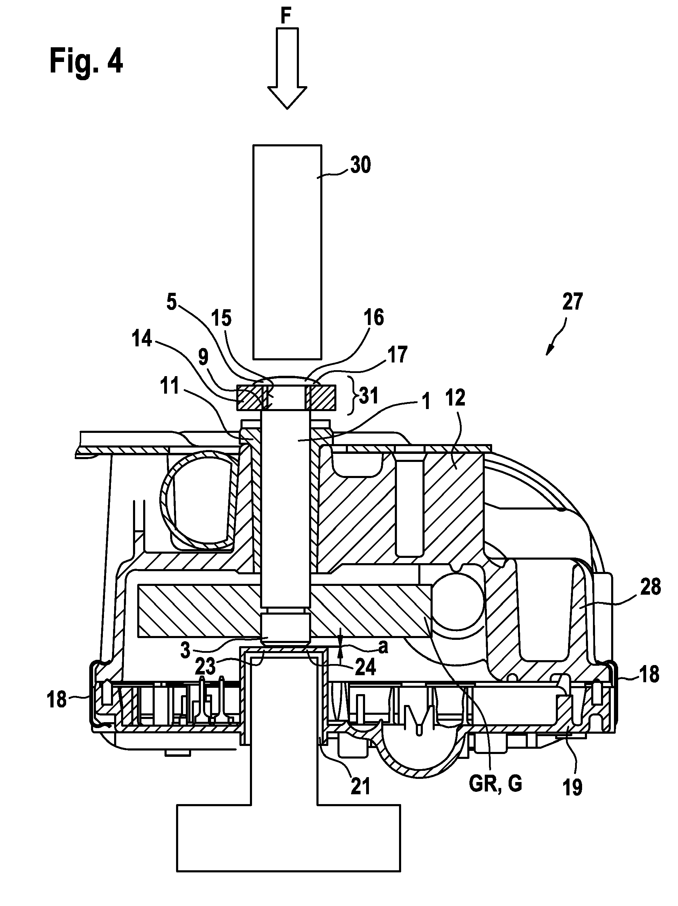

Figur 4 zeigt einen Wischerantrieb 27 in seinem Gehäuse 12, das aus einem Gehäusekörper 28 und dem Gehäusedeckel 19 besteht, wobei der Gehäusedeckel 19 am Gehäusekörper 28 durch Federklammern 18 gehalten ist. Die Antriebswelle 1 weist im Inneren des Gehäusekörpers 28 das Getriebe G auf, und ist in der Lagerung 11 gehalten. Auf der Ringstufe 9 (Figur 2) ist der Antriebskurbelarm 14 gelagert, dessen Aufnahmedurchbruch 15 von der Antriebswelle 1 durchdrungen und mit dem freien Endbereich 5 überragt wird.

Am gehäuseseitigen Ende 3 ist die Antriebswelle 1 in unmittelbarer Gegenüberlage des Bodens 23 des Napfes 21, der einstückig zum Gehäusedeckel 19, insbesondere der Gehäusewandung 32 im Wandbereich 24 gegenüberliegt. In den Napf 21 ist, gehäuseaußenseitig, ein Gegenlager 29 eingebracht, das den Boden 23 beaufschlagt, mit diesem also in unmittelbarer Berührlage tritt. In Axialrichtung der Antriebswelle 1 wird der freie Endbereich 5 mit einem Umformwerkzeug 30 mit der Kraft F beaufschlagt, um aus dem freien Endbereich 5 durch Vertaumeln die Wulst 17 als Vertaumelung 16 auszubilden. Die Ringstufe 9 und die Wulst 17 der Vertaumelung 16 bilden eine Axialsicherung 31 des Antriebskurbelarms 14. Durch den nur sehr geringen Abstand a zwischen gehäuseseitigem Ende 3 der Antriebswelle 1 und Boden 23 des Napfes 21 tritt bei Einbringung des Gegenlagers 29 und Kraftbeaufschlagung mit der Axialkraft F des freien Endes 5 der Antriebswelle 1 keine wesentliche Verformung des Bodens 23 und insbesondere keine wesentliche Axialverschiebung innerhalb des Getriebes G auf, sondern die in Axialrichtung wirkende Axialkraft F wird unter Mitinanspruchnahme des Bodens 23 (mithin der Gehäusewandung 32) von dem Gegenlager 29 abgefangen. Es erübrigen sich daher Gehäuseöffnungen, die die direkte Beaufschlagung der Antriebswelle 1 an ihrem gehäuseseitigen Ende 3 mit dem Gegenlage 29 ermöglichen, vollständig. Das Gehäuse, insbesondere vorliegender Gehäusedeckel 19, können folglich geschlossen ausgebildet werden, was die Zahl der erforderlichen Arbeitsschritte zur Fertigung des erfindungsgemäßen Wischerantriebs 27 reduziert, da weitere Dichtmaßnahmen, beispielsweise das Einbringen von Stopfen und/oder Dichtungen, im Bereich einer Gehäuseöffnung am gehäuseseitigen Ende 3 der Antriebswelle 1 nicht erforderlich sind, und sie verringern das Ausfallrisiko, da fehleranfällige Dichtungen oder Stopfen fehlen, das Gehäuse beziehungsweise der Gehäusedeckel 19 mit dem Napf 21 insbesondere einstückig ausgebildet ist.

## Patentansprüche

1. Wischerantrieb für ein Fahrzeug, insbesondere Kraftfahrzeug, mit einer in einem Gehäuse gelagerten Antriebswelle, an der ein Antriebskurbelarm festgelegt ist, wobei die Antriebswelle einen Aufnahmedurchbruch des Antriebskurbelarms durchsetzt und mit einem freien Endbereich aus dem Aufnahmedurchbruch, den Antriebskurbelarm überragend, axial herausragt, und wobei der freie Endbereich im Wesentlichen axial zum Festlegen des Antriebskurbelarms umgeformt ist, **dadurch gekennzeichnet, dass** die Antriebswelle (1) mit ihrem im Gehäuse (12) liegenden Ende (3) einem Wandbereich (24) des Gehäuses (12) mit einem derart geringen Abstand (a) gegenüberliegt oder an dem Wandbereich (24) anliegt, dass die axialen Umformungskräfte beim Festlegen des Antriebskurbelarms (14) gehäuseaußenseitig abfangbar sind.

2. Wischerantrieb nach Anspruch 1, **dadurch gekennzeichnet, dass** der Wandbereich (24) der Boden (23) eines dem Gehäuse (12) angehörenden Napfes (21) ist.

3. Wischerantrieb nach einem der vorhergehenden Ansprüche, **dadurch gekennzeichnet, dass** der Napf (21) als Gehäuseeinstülpung (20) ausgebildet ist.

4. Wischerantrieb nach einem der vorhergehenden Ansprüche, **dadurch gekennzeichnet, dass** der Wandbereich (24) zu einem Gehäusedeckel (19) des Gehäuses (12) gehört.

5. Wischerantrieb nach einem der vorhergehenden Ansprüche, **dadurch gekennzeichnet, dass** der Wandbereich (24) zu einem Getriebegehäusedeckel eines Getriebes des Wischerantriebs (27) gehört.

6. Wischerantrieb nach einem der vorhergehenden Ansprüche, **dadurch gekennzeichnet, dass** die Umformung als Vertaumelung (16) ausgebildet ist.

7. Verfahren zum Festlegen eines Antriebskurbelarms eines Wischerantriebs für ein Fahrzeug, insbesondere Kraftfahrzeug, an einer in einem Gehäuse gelagerten Antriebswelle, insbesondere zur Herstellung eines Wischerantriebs nach einem oder mehreren der vorhergehenden Ansprüche, mit folgenden Schritten:
- Einführen der Antriebswelle in einen Aufnahmedurchbruch des Antriebskurbelarms, derart, dass ein freier Endbereich der Antriebswelle aus dem Aufnahmedurchbruch, den Antriebskurbelarm überragend, axial herausragt,
- im Wesentlichen axiales Umformen des freien Endbereichs zur Ausbildung einer aus dem Material des freien Endbereichs gebildeten Wulst, die den Antriebskurbelarm axial beaufschlagt und fixiert,
- Abstützen des im Gehäuse liegenden Stirnendes der Antriebswelle beim Verformungsvorgang mittels eines außerhalb des Gehäuses liegenden Gegenlagers unter Dazwischenschaltung der Gehäusewandung.
